(19) Europäisches Patentamt

European Patent Office

Office européen des brevets

(11) **EP 3 539 089 B1**

(12) **EUROPEAN PATENT SPECIFICATION**

(45) Date of publication and mention
of the grant of the patent:
**18.06.2025 Bulletin 2025/25**

(21) Application number: **17797336.9**

(22) Date of filing: **10.11.2017**

(51) International Patent Classification (IPC):
***G07C 9/00*** (2020.01)   ***H04L 9/08*** (2006.01)
***H04L 9/32*** (2006.01)

(52) Cooperative Patent Classification (CPC):
**G07C 9/00857; H04L 9/0869; H04L 9/3271;
H04W 12/084;** G07C 2009/00396;
G07C 2009/00865; G07C 2209/08; H04L 2209/84

(86) International application number:
**PCT/EP2017/078876**

(87) International publication number:
**WO 2018/087284 (17.05.2018 Gazette 2018/20)**

(54) **A PHYSICAL KEY FOR PROVISIONING A COMMUNICATION DEVICE WITH DATA ALLOWING IT TO ACCESS A VEHICLE RESOURCE**

PHYSISCHER SCHLÜSSEL ZUR BEREITSTELLUNG EINER KOMMUNIKATIONSVORRICHTUNG MIT DATEN ZUR ERMÖGLICHUNG DES ZUGRIFFS AUF EINE FAHRZEUGRESSOURCE

CLÉ PHYSIQUE DE FOURNITURE DE DONNÉES À UN DISPOSITIF DE COMMUNICATION LUI PERMETTANT D'ACCÉDER À UNE RESSOURCE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2016 EP 16306480**

(43) Date of publication of application:
**18.09.2019 Bulletin 2019/38**

(73) Proprietor: **Thales Dis France SAS
92190 Meudon (FR)**

(72) Inventor: **CASTILLO, Laurent
92190 Meudon (FR)**

(56) References cited:
**US-A1- 2005 151 619   US-A1- 2014 277 837
US-A1- 2016 035 147   US-A1- 2016 049 033
US-B1- 6 975 202**

## Description

TECHNICAL FIELD

The present invention relates to a physical key for provisioning a communication device with data allowing it to access a vehicle resource. It is applicable to the Internet-of-things and to secure embedded systems.

BACKGROUND OF THE INVENTION

More and more automobile manufacturers offer electronic car locks that are mainly used for opening and starting a car. An electronic car lock is generally associated with one or several physical keys embedding basic electronic components in order to offer connectivity to the lock and securing the key secrets.

The most secure version of these physical keys contain an embedded secure element (eSE) holding secret material. These physical keys are lifelong keys and provide full access to the car, which restricts who they can be lent to.

Another trend for car manufacturers is to try and put car keys inside an owner's mobile phone, for convenience reasons (see for instance US 2014/277837 A1). These are so called virtual car keys. But to secure the keys at the same level as the physical keys, they often use hardware security on the phone, for example a trusted execution environment (TEEs), a smartcard with a subscriber identity module (SIM) application, an embedded secure element (eSE), or a combination thereof. This drastically limits which kind of device they can deploy on or add complex dependencies to secure element issuers.

SUMMARY OF THE INVENTION

The present invention is defined by the claims.

BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:

- Figure 1 illustrates schematically a technique for an owner to delegate access to its car;
- Figure 2 provides an example of a sequence diagram where a mobile application is provisioned by a derived key for accessing the resources of a car;
- Figure 3 provides an example of a sequence diagram in which a mobile application is used to open a vehicle lock.

DETAILED DESCRIPTION

In this description, a physical key refers to at least a vehicle remote that is capable of communicating with a vehicle lock for providing access to at least some of the vehicle's resources. It is called physical as it can be held in the hand.

A vehicle is a mobile machine configured to transport goods or people including but not limited to a car, a truck, a boat or a wagon. A vehicle resource refers to a part or a function provided to the owner of the car or an authorized person, such as a trunk, a vehicle cabin accessible by opening a door or the starting of an engine.

The expression vehicle lock refers for example to an electro-mechanical device implemented into one or several of the vehicle's doors and controlled by the vehicle remote with the function of locking or unlocking it. The vehicle lock can also refer to the system used to start the vehicle. For a given vehicle, one can have one or several installed vehicle locks. A vehicle lock system refers to a set of one or several lock installed on a given vehicle.

A physical key therefore refers to a vehicle remote allowing the access to at least a vehicle resource. The physical key can also refer to a combination of a vehicle remote associated with a traditional key. A traditional key refers to a device configured to operate a mechanical lock. A physical key can also be implemented into a single device comprising the vehicle remote and a traditional key or alternately in two separate devices.

In this description, the expressions "master key" and "derived key" are referring to cryptographic keys used for cryptographic functions. A cryptographic key is a piece of information that can be memorized into the memory of an electrical device such as a vehicle remote, a smartphone or a vehicle lock.

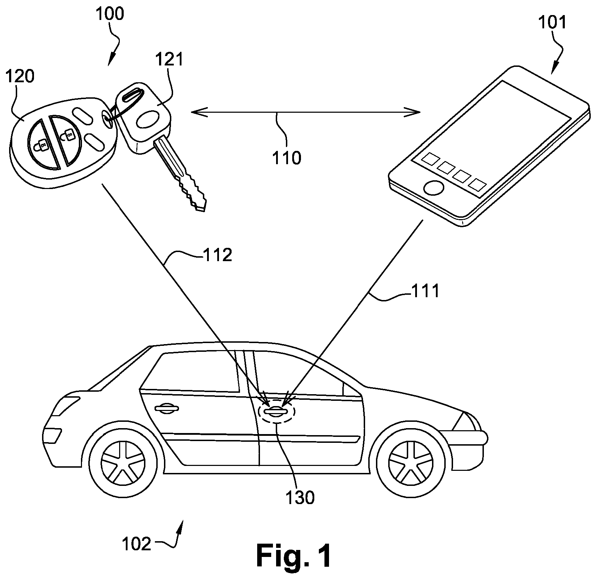

Figure 1 illustrates schematically a technique for an owner to delegate access to its car. For that purpose, the owner uses a physical key 100 comprising for example a vehicle remote 120 associated with a traditional key 121.

The physical key 100 can be used by the owner to access or to start his car 102 and is generally provided with the car at the time of purchase. The physical key as well as the vehicle locks installed on the car are provisioned with a master key during a personalization phase performed in a production facility.

The vehicle remote 120 can be used for establishing a communication link 112 with a vehicle lock 130 for example using infra-red technologies. Techniques that are belonging to the state of the art can be used for that purpose.

In addition, the owner of the car 102 can configure a communication device for accessing its car taking into account a set of at least one access rule. According to this example, the communication device is a smartphone 101. However, the invention is applicable to other types of communication devices, for example a smart watch or any electronic device comprising means to establish a communication link with the physical key 100 and a vehicle lock.

Using a communication device that is distinct from the physical key 100 presents several advantages. If the smartphone 102 belongs to the user, it allows him to leaves its physical key 100 at home. In another use case, the smartphone phone 102 may belong to a third party, for example a member of the owner's family or a friend. In that case, the owner is able to delegate a partial access to the car 102 by defining one or several access rules.

According to this example, a communication link is established between the physical key 100 and the smartphone 101 using a short-range communication protocol. Short-range communication protocols include but are not limited to Bluetooth, Bluetooth Low Energy (BLE) or Near-Field Communications (NFC) protocols. This communication link is preferably secured using state-of-the-art techniques as the data to be exchanged is sensitive.

Once the communication link 110 is established, the physical key sends a key that is derived from the master key. According to the invention, the master key is stored securely in a secure enclave implemented into the physical key 100. In one embodiment, the secure enclave is a secure element embedded into the vehicle remote 120.

Secure elements are small devices comprising a memory, a microprocessor and an operating system for computing treatments. Such secure elements may comprise a plurality of memories of different types. They are called "secure" because they are able to control the access to the data they contain and to authorize or not the use of data by other machines. The secure elements may also provide computation services based on cryptographic components. In general, secure elements have limited computing resources and are intended to be connected to a host machine. Secure elements may be removable or fixed to a host device.

The secure elements may embed an object-oriented virtual machine in order to be able to run applications written in an object-oriented language. Usually, these object-oriented applications manage applicative data which are stored into the secure element.

Other types of secure enclaves can also be used to memorize the master key, for example a trusted execution environment (TEE).

The smartphone 101 can use an application to manage the provisioning of the derived keys and to display information such as the access rules associated to a given derived key when required by the user of the application. The application can be made available on some application stores such as the App Store (trademark) or Google Play (trademark). Once configured and provisioned with the derived key and its associated access rules, the user can use the application to access some of the car resources.

As underlined, a derived key is associated to one or several access rules. An access rule is designed to limit the access to a vehicle lock system, for example the car trunk can be accessible but not the car doors. If the access rules allow the access to various resources of the car, the application can propose to the user different choices, for example "open the trunk", "open the right front door" or "start the car". If the user selects "open the right front door", a challenge can be sent by the smartphone 101 to the vehicle lock 130 and if it is successfully answered, the right front door finally opens. In this description, it is considered that a single derived key is calculated for a car. However, the invention is also applicable in the case where several derived keys are allocated to the car. For example, a different derived key can be allocated to each of the vehicle locks.

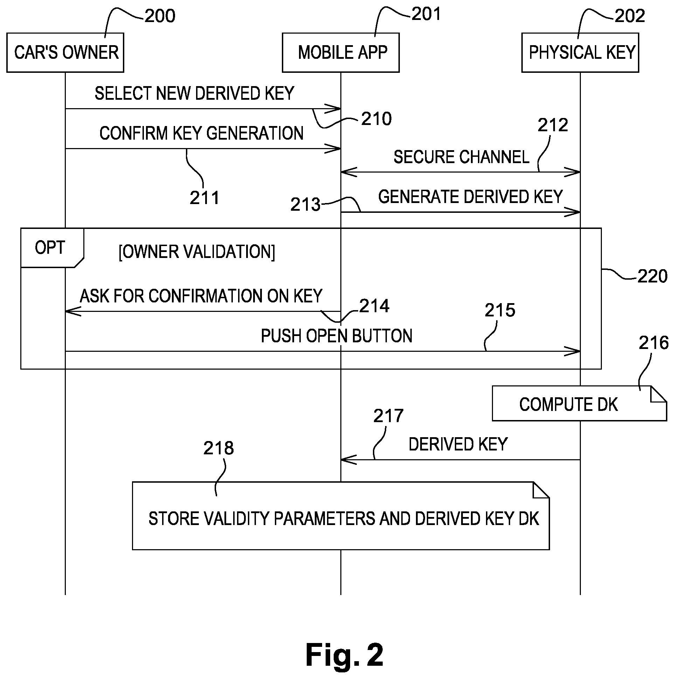

**Figure 2** provides an example of a sequence diagram where a mobile application is provisioned by a derived key for accessing to the resources of a car.

According to this example, the owner of the car 200 uses a mobile application 201 installed on a smartphone and selects 210 in a menu that a new derived key is required for this communication device. The owner 200 is then asked by the mobile application 201 to confirm the need for generating the new derived key. Once this is confirmed 211, the mobile application 201 and the physical key 202 establish 212 a secure channel via the smartphone (not represented). This secure channel is established for example using Bluetooth Low Energy (BLE).

Then, a request 213 to generate a new derived key is sent by the mobile application 201 via the smartphone to the physical key 202. This request 213 can be sent together with a set of at least one validity parameter defining the access rules, that is to say the conditions in which the derived key can be used for accessing the car resources. For example, the validity parameters include an expiration date after which the derived key will not be usable anymore, one or several time periods during which the access is allowed and an identifier of the resources for which the access is authorized. This identifier can be used to designate one of the car's door, the trunk or the starter.

According to one embodiment 220, a confirmation can then be requested 214 by the mobile application 201 to the owner 200. For example, a message is displayed on the smartphone's screen answering him to push a specific button located on its physical key 202. The owner then pushes 215 the button and the computation 216 of the derived key by the physical key 202 is triggered.

The master key MK is securely stored in a secure enclave embedded into the physical key 202. The derived key is designated as DK in the sequel and can be obtained by applying well-known derivation functions such as HMAC Key Derivation Function (HKDF), KDF1 or KDF2 as defined in ISO/IEC 18033 specification.

According to one aspect of the invention, one or several validity parameters are used as inputs for the derivation algorithm. In that case, the DK is derived from the master key MK and a set of at least one validity parameters, which can be expressed as follow:

$$DK = Derive1(MK, VP, Salt)$$

where:

DK designates the derived key;

MK designates the master key that is stored in a secure enclave of the physical key. It is to be noted that the master key is also stored in the memory of at least one vehicle lock;

Salt designates a derivation seed chosen by the physical key manufacturer in order to diversify the results from other manufacturers;

VP designates the validation parameters used to define the access rules;

Derive1( ) designates the derivation function used to calculate the derived key. This function can be an example an HKDF, KDF1 or KDF2 function.

Once the newly generated derived key is available, it can be sent 217 by the physical key 202 to the mobile application 201. The validity parameters and the mobile key DK are then stored 218 in the smartphone. As an example, those can be memorized into an embedded secure element (eSE), a SIM card, a trusted execution environment (TEE) or protected using white box cryptography (WBC) technique.

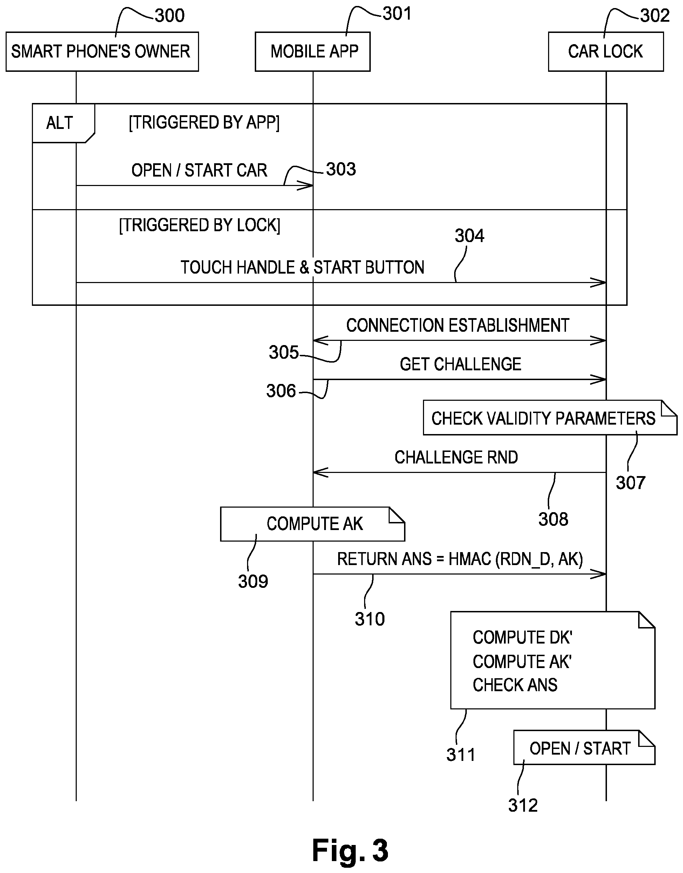

**Figure 3** provides an example of a sequence diagram in which a mobile application is used to open a vehicle lock.

The owner of the smartphone 300 requests an access to the car. The so-called owner of the smartphone can be the owner of the car or a third party to which an access to some of the car resources is delegated. For sending the request, he can push 303 a button displayed on the screen of the smartphone by the mobile application 301. As an example, the owner 300 can choose among several actions associated to a given resource of the car. Example of choices that can be made available to the owner of the smartphone are: opening one or all of the car's doors, opening the trunk or starting the car. Those different actions can be materialized by different buttons displayed on the smartphone's screen.

Alternatively, the smartphone's owner can push 304 a button on or inside the car, for example a button that is located next to the starter if he want to start the car.

Once this is done, a connection link is established 305 between the mobile application 301 and the car lock 302. For example, the car lock 302 can act like a beacon supporting Bluetooth Low Energy (BLE). Once it is detected by the smartphone, a communication link is established. Other technologies such as NFC can also be used. In that case, the communication link can be established by tapping an NFC-enabled smartphone to the vehicle lock 302.

Once the communication link is established, a request for challenge is sent 306 by the mobile application 301 to the vehicle lock 302 together with the validity parameters VP that have been stored in the smartphone at the time of generating the derived key. It can also be sent with an action ACT identifying what the user wants to do, for example opening the car's trunk.

The vehicle lock checks 307 the validity parameters. In other words, it verifies the access rules defined by the validity parameters. For example, if the validity parameters are chosen such that the smartphone's owner is allowed to start the car between 5 and 7 p.m., and that the time maintained by the car lock corresponds to 9 p.m., the access is denied. On the contrary, if the validity parameters are positively verified, a challenge-response authentication is carried out. For that purpose, a challenge message 308 comprising a random number RND is transmitted by the vehicle lock 302 to the mobile application 301. Then, an intermediate key AK is determined 309 by the mobile application 301. AK is for example derived from the mobile key DK and the action ACT:

$$AK = Derive2(DK, ACT, Salt2)$$

Where

AK designates an intermediate key used to generate the response to the challenge;

DK designates the mobile key memorized in the smartphone;

ACT designates the action that the owner of the smartphone wants to carry out;

Salt2 designates a derivation seed chosen by the physical key manufacturer in order to diversify the results from other manufacturers; Derive2( ) designates the derivation function used to calculate the intermediate key AK. This function can be for example an HKDF, KDF1 or KDF2 function.

Then, the response to the challenge is calculated using a Keyed-Hash Message Authentication Code (HMAC) function:

$$ANS = HMAC(RND, AK)$$

Where:

ANS designates the answer to the challenge;

*RND* designates the random number that has been transmitted with the challenge message;

*AK* designates the intermediate key, previously mentioned in this description;

*HMAC*() designates the Keyed-Hash Message Authentication Code function

The answer ANS is then transmitted 310 by the mobile application 301 to the vehicle lock 302 together with a return message 310. Once this message is received by the car lock 302, it calculates 311 a version DK' of the derived key based on what it knows and what is received. An intermediate key AK' is also calculated:

$$DK' = Derive1(MK, VP)$$

$$AK' = Derive2(DK', ACT)$$

Then, the answer is re-calculated as follow:

$$ANS' = HMAC(RND, AK')$$

If the received answer ANS is equal to the re-calculated one ANS', the action ACT can be carried out 312, for example "opening the car's trunk" or "starting the car".

In an alternative embodiment, steps 309 and 310 can be replaced as follow. The answer is calculated using the following expression:

$$ANS = HMAC(RND|ACT, DK)$$

Where *RND|ACT* represents the concatenation of *RND* with *ACT*.

In that case, no intermediate key *AK* is required and the verification is done by the vehicle lock by recalculating the derived key and the received answer as follow:

$$DK' = Derive1(MK, VP)$$

$$ANS' = HMAC(RND|ACT, DK')$$

One advantage of the invention is that the master key MK is never transmitted once provisioned on the physical key and is kept securely in a secure enclave. When delegating the rights to access to a car resource, it is a derived key that is generated and transmitted to communication device. The interest of associating the derived key with a set of validity parameters is to limit the possibility of using this key compared to what can be done when using the physical key directly. For example, the physical key allows a complete access to the vehicle resources while the communication device that is using the derived key is only able to access to a subset of the available resources for a limited period of time. The derived key is less secure than the master key as it is transmitted over the air, but this drawback is advantageously mitigated by limiting its use using the access rules materialized by the validity parameters.

The embodiments of the invention described above propose to use a so-called derived key obtained from a master key provisioned in the vehicle lock. However, the skilled person will understand that alternatively, a key pair comprising a public key and a private key can be derived from the master key. In that case, this derived key pair is used for enabling the communication device 101 to answer a security challenge from the vehicle lock system 130 and the vehicle lock system 130 to verify said answer, the access to the vehicle resource being allowed if the answer is successfully verified.

**Claims**

1. A system comprising a physical key (100), a communication device (101) and a vehicle lock (130) installed on a vehicle memorizing a first cryptographic key called master key in a secure enclave, the vehicle lock (130) being configured to communicate remotely with the communication device (101),
   wherein the physical key (100) is configured to provision the communication device (101) with data allowing said communication device (101) to access a vehicle resource by operating remotely the vehicle lock (130), the physical key (100) comprising a secure enclave also storing the master key, the secure enclave being an embedded secure element or a trusted execution environment, the physical key (100) being further configured to:

   - establish a communication link (110) with the communication device (101);
   - derive by the secure enclave a second cryptographic key called derived key from the master key; and
   - transmit to the communication device (101) via the secure communication link (110) the derived key,

      wherein the communication device (101) is configured to store the derived key received from the physical key (100) and wherein the vehicle lock (130) is further configured to:

         - establish a communication link (306) with the communication device (101),
         - on request (306) from the communication device (101) send to the communication device a challenge message (308) comprising a random number;
- receive from the communication device (101) a security challenge answer (310) determined by the communication device (101) using the stored derived key and the random number;
- generate locally the derived key using the stored master key, compute locally a version of the security challenge answer and verify that it is identical to the one received from the communication device (311); and
- in case of a positive verification, grant the access to the vehicle resource (312).

2. A system according to claim 1, wherein, the derived key is derived by the secure enclave of the physical key (100) from a set of at least one validity parameter that is taken in addition to the master key, the set of at least one validity parameter defining at least one access rule limiting the access to the vehicle resource, said communication device (101) being configured to receive both the derived key and the set of at least one validity parameter from the physical key.

3. A system according to claim 2, wherein the set of at least one validity parameter defines an expiration date after which the derived key cannot be used for accessing the resource.

4. A system according to claim 2 or 3, wherein the set of at least one validity parameter defines a time period in a day during which the derived key is usable for accessing the vehicle's resource.

5. A system according to any of preceding claims, wherein the set of at least one validity parameter defines a list of at least one action that can be carried out by the communication device (101) for accessing the vehicle's resource.

6. A system according to any of preceding claims, wherein the physical key (100) is composed of a vehicle remote (120) and a traditional key (121).

**Patentansprüche**

1. System, umfassend einen physischen Schlüssel (100), eine Kommunikationsvorrichtung (101) und ein Fahrzeugschloss (130), das an einem Fahrzeug installiert ist, das einen ersten kryptografischen Schlüssel, Hauptschlüssel genannt, in einer sicheren Enklave speichert, wobei das Fahrzeugschloss (130) konfiguriert ist, um mit der Kommunikationsvorrichtung (101) aus der Ferne zu kommunizieren,

wobei der physische Schlüssel (100) konfiguriert ist, um die Kommunikationsvorrichtung (101) mit Daten zu versorgen, die der Kommunikationsvorrichtung (101) ermöglichen, durch eine Betätigung des Fahrzeugschlosses (130) aus der Ferne auf eine Fahrzeugressource zuzugreifen, der physische Schlüssel (100) umfassend eine sichere Enklave, in der ebenso der Hauptschlüssel gespeichert ist, wobei die sichere Enklave ein eingebettetes sicheres Element oder eine vertrauenswürdige Ausführungsumgebung ist, und wobei der physische Schlüssel (100) ferner konfiguriert ist zum:

- Herstellen einer Kommunikationsverbindung (110) mit der Kommunikationsvorrichtung (101);
- Ableiten, durch die sichere Enklave, eines zweiten kryptografischen Schlüssels, abgeleiteter Schlüssel genannt, von dem Hauptschlüssel; und
- Übertragen, an die Kommunikationsvorrichtung (101) über die sichere Kommunikationsverbindung (110), des abgeleiteten Schlüssels,

wobei die Kommunikationsvorrichtung (101) konfiguriert ist, um den abgeleiteten Schlüssel zu speichern, der von dem physischen Schlüssel (100) empfangen wird, und wobei das Fahrzeugschloss (130) ferner konfiguriert ist zum:

- Herstellen einer Kommunikationsverbindung (306) mit der Kommunikationsvorrichtung (101),
- auf Anfrage (306) von der Kommunikationsvorrichtung (101), Senden einer Challenge-Nachricht (308) an die Kommunikationsvorrichtung, umfassend eine Zufallszahl;
- Empfangen, von der Kommunikationsvorrichtung (101), einer Sicherheits-Challenge-Antwort (310), die durch die Kommunikationsvorrichtung (101) unter Verwendung des gespeicherten abgeleiteten Schlüssels und der Zufallszahl bestimmt wird;
- lokales Erzeugen des abgeleiteten Schlüssels unter Verwendung des gespeicherten Hauptschlüssels, lokales Berechnen einer Version der Sicherheits-Challenge-Antwort und Verifizieren, dass sie mit der einen identisch ist, die von der Kommunikationsvorrichtung (311) empfangen wird; und
- im Falle einer positiven Verifizierung, Gewähren des Zugriffs auf die Fahrzeugressource (312).

2. System nach Anspruch 1, wobei der abgeleitete Schlüssel durch die sichere Enklave des physischen Schlüssels (100) von einem Satz von mindestens einem Gültigkeitsparameter abgeleitet wird, der zusätzlich zu dem Hauptschlüssel verwendet wird, wobei der Satz von mindestens einem Gültigkeitsparameter mindestens eine Zugriffsregel definiert, die den Zugriff auf die Fahrzeugressource beschränkt, und wobei die Kommunikationsvorrichtung (101) konfiguriert ist, um sowohl den abgeleiteten Schlüssel als auch den Satz von mindestens einem Gültigkeitsparameter von dem physischen Schlüssel zu empfangen.

3. System nach Anspruch 2, wobei der Satz von mindestens einem Gültigkeitsparameter ein Ablaufdatum definiert, nach dem der abgeleitete Schlüssel nicht mehr für den Zugriff auf die Ressource verwendet werden kann.

4. System nach Anspruch 2 oder 3, wobei der Satz von mindestens einem Gültigkeitsparameter einen Zeitraum an einem Tag definiert, während dem der abgeleitete Schlüssel für den Zugriff auf die Ressource des Fahrzeugs verwendbar ist.

5. System nach einem der vorstehenden Ansprüche, wobei der Satz von mindestens einem Gültigkeitsparameter eine Liste von mindestens einer Aktion definiert, die durch die Kommunikationsvorrichtung (101) ausgeführt werden kann, um auf die Ressource des Fahrzeugs zuzugreifen.

6. System nach einem der vorstehenden Ansprüche, wobei der physische Schlüssel (100) aus einer Fahrzeugfernbedienung (120) und einem herkömmlichen Schlüssel (121) besteht.

**Revendications**

1. Système comprenant une clé physique (100), un dispositif de communication (101) et une serrure de véhicule (130) installée sur un véhicule mémorisant une première clé cryptographique appelée clé principale dans une enclave sécurisée, la serrure de véhicule (130) étant configurée pour communiquer à distance avec le dispositif de communication (101),

dans lequel la clé physique (100) est configurée pour fournir au dispositif de communication (101) des données permettant audit dispositif de communication (101) d'accéder à une ressource de véhicule en actionnant à distance la serrure de véhicule (130), la clé physique (100) comprenant une enclave sécurisée stockant également la clé principale, l'enclave sécurisée étant un élément sécurisé intégré ou un environnement d'exécution de confiance, la clé physique (100) étant en outre configurée pour :

- établir un lien de communication (110) avec le dispositif de communication (101) ;
- dériver par l'enclave sécurisée une seconde clé cryptographique appelée clé dérivée à partir de la clé principale ; et
- transmettre au dispositif de communication (101), par l'intermédiaire du lien de communication sécurisé (110), la clé dérivée,

dans lequel le dispositif de communication (101) est configuré pour stocker la clé dérivée reçue de la clé physique (100) et dans lequel la serrure de véhicule (130) est en outre configurée pour :

- établir un lien de communication (306) avec le dispositif de communication (101),
- sur demande (306) du dispositif de communication (101), envoyer au dispositif de communication un message de défi (308) comprenant un nombre aléatoire ;
- recevoir du dispositif de communication (101) une réponse au défi de sécurité (310) déterminée par le dispositif de communication (101) à l'aide de la clé dérivée stockée et du nombre aléatoire ;
- générer localement la clé dérivée à l'aide de la clé principale stockée, calculer localement une version de la réponse au défi de sécurité et vérifier qu'elle est identique à celle reçue du dispositif de communication (311) ; et
- en cas de vérification positive, accorder l'accès à la ressource de véhicule (312).

2. Système selon la revendication 1, dans lequel la clé dérivée est dérivée par l'enclave sécurisée de la clé physique (100) à partir d'un ensemble d'au moins un paramètre de validité qui est pris en plus de la clé principale, l'ensemble d'au moins un paramètre de validité définissant au moins une règle d'accès limitant l'accès à la ressource de véhicule, ledit dispositif de communication (101) étant configuré pour recevoir à la fois la clé dérivée et l'ensemble d'au moins un paramètre de validité de la clé physique.

3. Système selon la revendication 2, dans lequel l'ensemble d'au moins un paramètre de validité définit une date d'expiration après laquelle la clé dérivée ne peut plus être utilisée pour accéder à la ressource.

4. Système selon la revendication 2 ou 3, dans lequel l'ensemble d'au moins un paramètre de validité définit une période de temps dans une journée pendant laquelle la clé dérivée est utilisable pour accéder à la ressource du véhicule.

5. Système selon l'une quelconque des revendications précédentes, dans lequel l'ensemble d'au moins un paramètre de validité définit une liste d'au moins une action pouvant être effectuée par le dispositif de communication (101) pour accéder à la ressource du véhicule.

6. Système selon l'une quelconque des revendications précédentes, dans lequel la clé physique (100) est composée d'une télécommande de véhicule (120) et d'une clé traditionnelle (121).

**Fig. 1**

Fig. 2

**Fig. 3**

**REFERENCES CITED IN THE DESCRIPTION**

**Patent documents cited in the description**

- US 2014277837 A1